# EUROPEAN PATENT SPECIFICATION

(11) **EP 3 363 665 B1**
(45) Date of publication and mention of the grant of the patent: **04.12.2019**
(21) Application number: 16872582.8
(22) Date of filing: 13.10.2016
(51) Int. Cl.: B60H 1/00

(54) **AIR CONDITIONING DEVICE FOR VEHICLE**
KLIMATISIERUNGSVORRICHTUNG FÜR FAHRZEUG
DISPOSITIF DE CLIMATISATION POUR VÉHICULE

(30) Priority: 07.12.2015 JP 2015238494
(43) Date of publication of application: 22.08.2018
(73) Proprietor: Japan Climate Systems Corporation, Higashihiroshima-shi, Hiroshima 739-0153 (JP)
(72) Inventor: NAGAOKA, Shuji, Higashihiroshima-shi Hiroshima 739-0153 (JP); KANEMOTO, Hideyuki, Higashihiroshima-shi Hiroshima 739-0153 (JP)
(74) Representative: Laufhütte, Dieter
(86) International application number: PCT/JP2016/004563
(87) International publication number: WO 2017/098680

(56) References cited:
- EP-A2- 1 445 133
- JP-A- 2004 237 940
- JP-A- 2007 125 955
- JP-A- 2009 143 330
- US-A1- 2002 157 811
- US-A1- 2006 027 354
- US-A1- 2014 087 646
- US-A1- 2015 343 877

## Description

### TECHNICAL FIELD

The present disclosure relates to vehicle air conditioners mounted on, e.g., automobiles, and particularly relates to a technique capable of obtaining an air-conditioned wind having an intended temperature by mixing together warm air and cold air that have been separately generated.

### BACKGROUND ART

In general, a vehicle air conditioner mounted on, e.g., an automobile includes a cooling heat exchanger configured as a heat pump evaporator, a heating heat exchanger configured as a heater core in which engine cooling water circulates, and a casing housing these heat exchangers. Air-conditioning air introduced into the casing is changed to cold air by a cooling heat exchanger and/or to warm air by a heating heat exchanger, and then, the cold air and the warm air are mixed together to obtain an air-conditioned wind. Thereafter, the air-conditioned wind is supplied to an outlet selected from a defrost outlet, a vent outlet, or a heat outlet to condition the air in a cabin (see Patent Documents 1 to 4).

Patent Document 1 shows that the casing houses a baffle plate disposed at a position where a warm air passage and a cold air passage join each other. The baffle plate is provided with a plurality of warm air guide grooves guiding the warm air which has flowed through the warm air passage toward the defrost outlet. At a gap between the warm air guide grooves, the cold air which has flowed through the cold air passage and the warm air which has flowed through the warm air passage are mixed together.

Patent Document 2 also shows that the casing houses a baffle plate at a position where warm air passages and cold air passages join each other. The baffle plate of Patent Document 2 includes the warm air passages through which warm air flows and mixed air passages through which mixed air of the cold air and the warm air flow. The warm air passages and the warm air passages are alternately arranged in the width direction.

Patent Document 3 shows that the casing houses a warm air guide member disposed at a position where a warm air passage and a cold air passage join each other. The warm air guide member includes a warm air guide passage guiding part of warm air to the defrost outlet, and the cold air and the warm air are mixed together in the outside of the warm air guide passage.

Patent Document 4 shows that the casing houses a rectifying plate in which a warm air passage and a cold air passage join together. The rectifying plate includes a warm air guiding tube guiding part of warm air to the defrost outlet, and the cold air and the warm air are mixed together in the outside of the warm air guiding pipe.

### CITATION LIST

### PATENT DOCUMENTS

Patent Document 1: Japanese Patent No. 4172013
Patent Document 2: Japanese Patent No. 4811384
Patent Document 3: Japanese Patent No. 5151591
Patent Document 4: Japanese Patent No. 5470006

US 2014/087646 A1 discloses a vehicle air conditioning apparatus including a case having a defrosting air outlet, a face air outlet and a foot air outlet, a mixing zone provided on a downstream side of a cold air flow path and a warm air flow path within the case and in which cold air and warm air are merged, and a face air outlet door which opens and closes the face air outlet. The face air outlet has a constantly open portion not closed by the face air outlet door. In the mixing zone, there is provided an air guide which has a warm air leading path guiding part of the warm air toward the defrosting air outlet preferentially. The air guide includes a guide wall forming the warm air leading path and having a warm air outlet which causes part of the warm air to flow toward the constantly open portion.

### SUMMARY OF THE INVENTION

### TECHNICAL PROBLEM

Recently, it has been required to further downsize vehicle air conditioners, and it also has been considered to downsize casings including heat exchangers and other components. Downsizing a casing means that the interior space thereof is also reduced. For example, an air mixing space where cold air and warm air are mixed together also needs to have a smaller volume. The smaller air mixing space makes it difficult to mix cold air and warm air together, resulting in degradation of temperature control performance.

Therefore, it is conceivable to house the baffle plate or the like in the casing as disclosed in Patent Documents 1 to 4 to improve temperature control performance. However, if the air mixing space is further downsized, it may be difficult to allow the baffle plate or the like in Patent Documents 1 to 4 to provide excellent temperature control performance.

The reasons for the difficulty will be as follows. In general, the power of the cold air flowing through the cold air passage is greater than that of the warm air which flowing through the warm air passage since the cold air has not passed through the heating heat exchanger. The amount of the cold air tends to be greater than that of the warm air. The baffle plates or the like in Patent Documents 1 to 4 are provided in view of the difference between the power of the cold air and the power of the warm air, i.e., air amount difference. If the cold air and the warm air are simply mixed together in the air mixing space, the cold air is superior to the warm air, and it becomes difficult to control the temperature as intended, and thus, the warm air is configured to be preferentially guided toward the defrost outlet, and at the other portions, the cold air and the warm air are mixed together. Even if doing so, the cold air flows more powerfully as described above, and thus, in a blowout mode where the defrost outlet is open, the amount of the cold air flowing toward the defrost outlet is increased. As a result, the amount of the warm air flowing toward the defrost outlet is decreased, and an air-conditioned wind colder than the air as intended is blown out. Therefore, an air-conditioned wind blown out of the defrost outlet might not defog the front glass.

The present disclosure is conceived in view of the above problems, and attempts to improve temperature control performance and comfort in a situation where a downsized casing is provided with a baffle controlling flows of the cold air and of the warm air.

### SOLUTION TO THE PROBLEM

In order to achieve the above attempts, the present disclosure is configured to allow a baffle disposed at a position in which warm air and cold air join each other to guide the warm air toward the defrost outlet, and the cold air toward the vent outlet, according to clam 1.

A vehicle air conditioner includes: a cooling heat exchanger cooling air-conditioning air; a heating heat exchanger heating air-conditioning air; a casing including: a cold air passage provided with the cooling heat exchanger; a warm air passage communicating with a downstream portion of the cold air passage, and provided with the heating heat exchanger; a bypass passage branched from the downstream portion of the cold air passage and bypassing the warm air passage; an air mixing space allowing a downstream portion of the warm air passage to communicate with a downstream portion of the bypass passage; and defrost outlet, a vent outlet, and a heat outlet each communicating with the air mixing space; and an air mix damper disposed inside the casing and adjusting an amount of warm air flowing into the air mixing space from the downstream portion of the warm air passage and an amount of cold air flowing into the air mixing space from the downstream portion of the bypass passage, wherein a baffle is disposed inside the casing at a position where the warm air and the cool air join together, and the baffle is provided with a warm air guide guiding the warm air which has flowed through the warm air passage toward the defrost outlet, and a cold air guide guiding the cold air which has flowed through the bypass passage toward at least one of the vent outlet or the heat outlet.

According to the configuration, the air-conditioning air flowing through the cold air passage is cooled by the cooling heat exchanger to become cold air. When flowing through the warm air passage, this cold air is heated by the heating heat exchanger to become warm air, whereas, when flowing through the bypass passage, the state of the cold air is kept. The air mix damper is operated to adjust the amounts of the warm air and of the cold air which flow in the air mixing space to generate an air-conditioned wind with a desired temperature in the air mixing space. Subsequently, the air-conditioned wind is blown out of the defrost outlet and the vent outlet according to the blowout mode and is supplied to the corresponding portions of the cabin.

The warm air which has flowed through the warm air passage is guided toward the defrost outlet by the warm air guide of the baffle, sufficiently supplying the warm air to the defrost outlet. Further, at that time, the cold air which has flowed through the bypass passage is guided toward at least one of the vent outlet or the heat outlet by the cold air guide of the baffle. Thus, the powerful cold air which has not passed through the heating heat exchanger is less likely to flow toward the defrost outlet. This substantially prevents a drop in temperature of the air-conditioned wind blown out of the defrost outlet.

The cold air is guided toward at least one of the vent outlet or the heat outlet by the cold air guide of the baffle. As a result, during a vent mode mainly selected in summer, the temperature of the air-conditioned wind blown out of the vent outlet becomes low, and the air-conditioned wind is sufficiently provided.

The cold air guide of the baffle may guide the cold air toward only the vent outlet or only the heat outlet, or both the vent outlet and the heat outlet.

The vent outlet may be disposed below the defrost outlet, and the cold air guide may is disposed in a lower portion of the baffle.

According to the configuration, in a situation where the vent outlet is disposed below the defrost outlet, the cold air guide is positioned in the lower portion of the baffle, allowing the cold air guide to efficiently guide the cold air.

The baffle may be provided with a warm and clod air mixing passage mixing the warm air which has flowed through the warm air passage and the cold air which has flowed through the bypass passage together, and the cold air guide may be tube-shaped, and may be positioned adjacent to an upstream portion of the warm and clod air mixing passage in a flow direction in the baffle.

According to the configuration, the cold air guide reduces the flow channel of the upstream portion of the warm and clod air mixing passage. This enhances the flow rate of the warm air flowing into the warm and clod air mixing passages, facilitating mixing of the warm air with cold air. The warm air is likely to flow in the warm air guide, obtaining a further outstanding advantage of the warm air guide.

The defrost outlet may be provided to a top wall of the casing, and the baffle may be provided with a cold-air-side plate portion extending downward and guiding the cold air, which has flowed through the bypass passage, downward.

According to the configuration, the cold air which has flowed through the bypass passage is guided by the cold-air-side plate portion of the baffle so as to be away from the defrost outlet. Thus, the cold air is less likely to flow toward the defrost outlet, substantially preventing a drop in temperature of the air-conditioned wind blown out of the defrost outlet.

The heat outlet may be disposed below the defrost outlet and the vent outlet, and a lower portion of the baffle may be provided with a warm-air-side plate portion extending downward and substantially preventing the warm air, which has flown through the warm air passage, from flowing toward the heat outlet.

According to this configuration, the warm air which has flowed through the warm air passage is less likely to be leaked out of the lower portion of the baffle toward the heat outlet, sufficiently obtaining the advantage of guiding the warm air by the baffle.

The vent outlet may be disposed at both sides of the casing in a vehicle width direction, and the cold air guide may be disposed at both sides of the baffle in the vehicle width direction, and guide the cold air toward the vent outlet at the both sides in the vehicle width direction.

According to this configuration, cold air is guided to the left and right vent outlets in the vehicle width direction which is disadvantageous for wind distribution. This makes it possible to sufficiently supply the cold air from the left and right vent outlets in the vehicle width direction.

The warm air guide and the cold air guide may extend in different directions from each other.

According to this configuration, in a situation where the flow of the warm air by the warm air guide is different from that of the cold air by the cold air guide, the warm air and cold air can be guided to appropriate directions.

### ADVANTAGES OF THE INVENTION

According to the present disclosure, the baffle disposed at a position where the flow of warm air and the flow of cool air join together is provided with the warm air guide guiding the warm air which has flowed through the warm air passage toward the defrost outlet and the cold air guide guiding the cold air which has flowed through the bypass passage toward at least one of the vent outlet or the heat outlet. This makes it possible to appropriately adjust the temperature of the air-conditioned wind blown out of the defrost outlet and the temperature of the air-conditioned wind blown out of the vent outlet. This can accurately control the temperature to improve comfort.

In the configuration in which the vent outlet is disposed below the defrost outlet, the cold air guide can efficiently guide cold air to the vent outlet.

The baffle is provided with the warm and clod air mixing passage, and the cold air guide is tube-shaped, and is positioned adjacent to the upstream portion of the warm and clod air mixing passage in a flow direction. This enhances the flow rate of the warm air flowing into the warm and clod air mixing passages, facilitating mixing of the warm air with cold air. In addition, the advantage obtained by the warm air guide becomes more outstanding.

The defrost outlet is provided to the top wall of the casing, and the baffle is provided with the cold-air-side plate portion extending downward and guiding the cold air, which has flowed through the bypass passage, downward. Thus, the cold air is likely to flow toward the defrost outlet, substantially preventing a drop in temperature of the air-conditioned wind blown out of the defrost outlet.

The heat outlet is disposed below the defrost outlet and the vent outlet, and the lower portion of the baffle is provided with the warm-air-side plate portion extending downward and substantially preventing the warm air, which has flown through the warm air passage, from flowing toward the heat outlet. This makes it possible to substantially prevent the warm air from being leaked out of the lower portion of the baffle to the heat outlet, sufficiently obtaining the guiding advantage of guiding the warm air by the baffle.

The cold air can be guided toward the vent outlet at the both sides in the vehicle width direction, sufficiently supplying the cold air from the vent outlet.

In a situation where the flow of the warm air is different from that of the cold air, the warm air guide and the cold air guide can guide the warm air and cold air.

### BRIEF DESCRIPTION OF THE DRAWINGS

[FIG. 1] FIG. 1 is a vertical cross-sectional view taken along a line passing through a right warm and clod air mixing passage of a baffle in a vehicle air conditioner according to a first embodiment.
[FIG. 2] FIG. 2 is a vertical cross-sectional view taken along a line passing through a middle right cold air guide tube of the baffle in the vehicle air conditioner according to the first embodiment.
[FIG. 3] FIG. 3 is a vertical cross-sectional view taken along a line passing through a central warm air guide tube of the baffle in the vehicle air conditioner according to the first embodiment.
[FIG. 4] FIG. 4 is a perspective view of the baffle according to the first embodiment as viewed from the rear side.
[FIG. 5] FIG. 5 is a left side view of the baffle according to the first embodiment.
[FIG. 6] FIG. 6 is a view of the baffle according to the first embodiment as viewed from the rear side.
[FIG. 7] FIG. 7 is a plan view of the baffle according to the first embodiment.
[FIG. 8] FIG. 8 is a bottom view of the baffle according to the first embodiment.
[FIG. 9] FIG. 9 is a view of the baffle according to the first embodiment as viewed from the front side.
[FIG. 10] FIG. 10 is a vertical cross-sectional view taken along a line passing through a right warm and clod air mixing passage of a baffle in a vehicle air conditioner according to a second embodiment.
[FIG. 11] FIG. 11 is a vertical cross-sectional view taken along a line passing through a middle right cold air guide tube of the baffle in the vehicle air conditioner according to the second embodiment.
[FIG. 12] FIG. 12 is a vertical cross-sectional view taken along a line passing through a central warm air guide tube of the baffle in the vehicle air conditioner according to the second embodiment.
[FIG. 13] FIG. 13 is a perspective view of the baffle according to the second embodiment as viewed from the rear side.

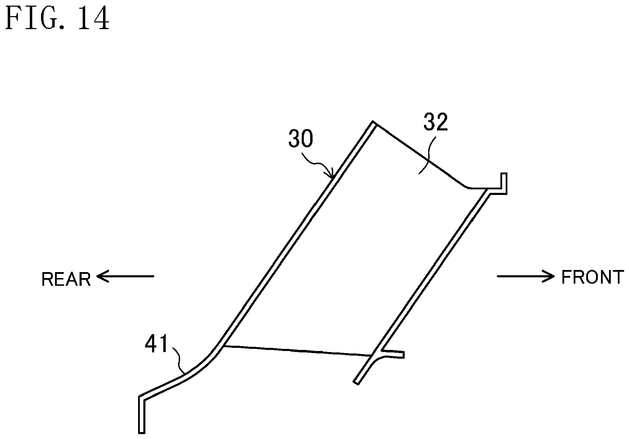

[FIG. 14] FIG. 14 is a right side view of the baffle according to the second embodiment.

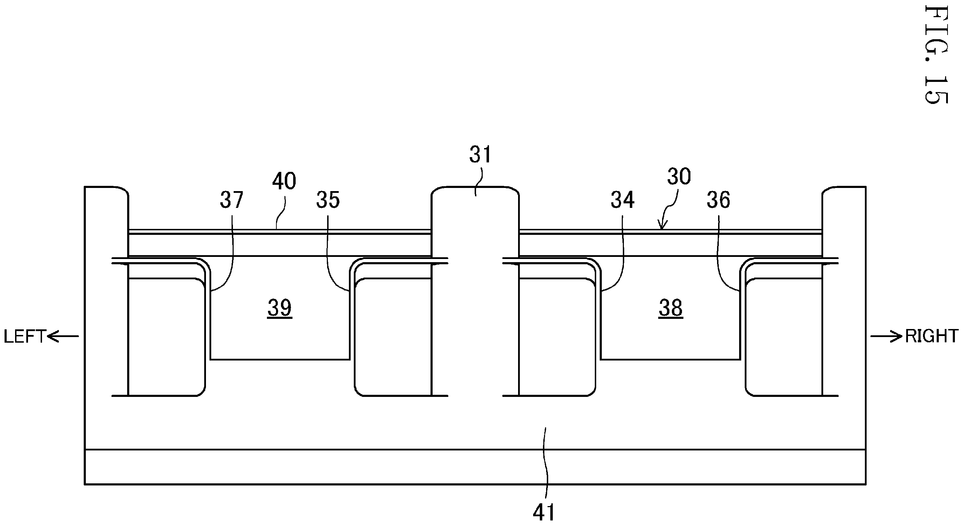

[FIG. 15] FIG. 15 is a view of the baffle according to the second embodiment as viewed from the rear side.

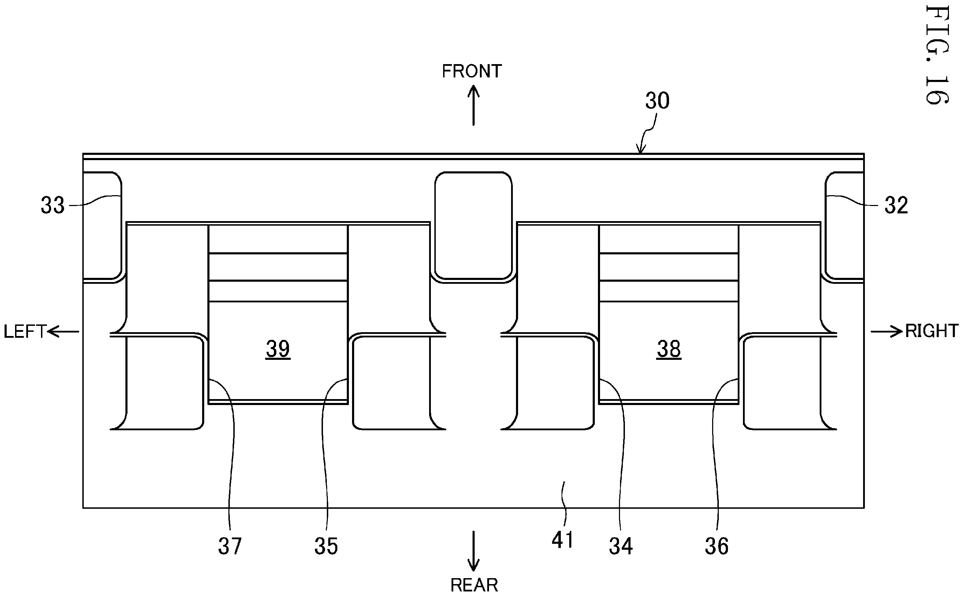

[FIG. 16] FIG. 16 is a plan view of the baffle according to the second embodiment.

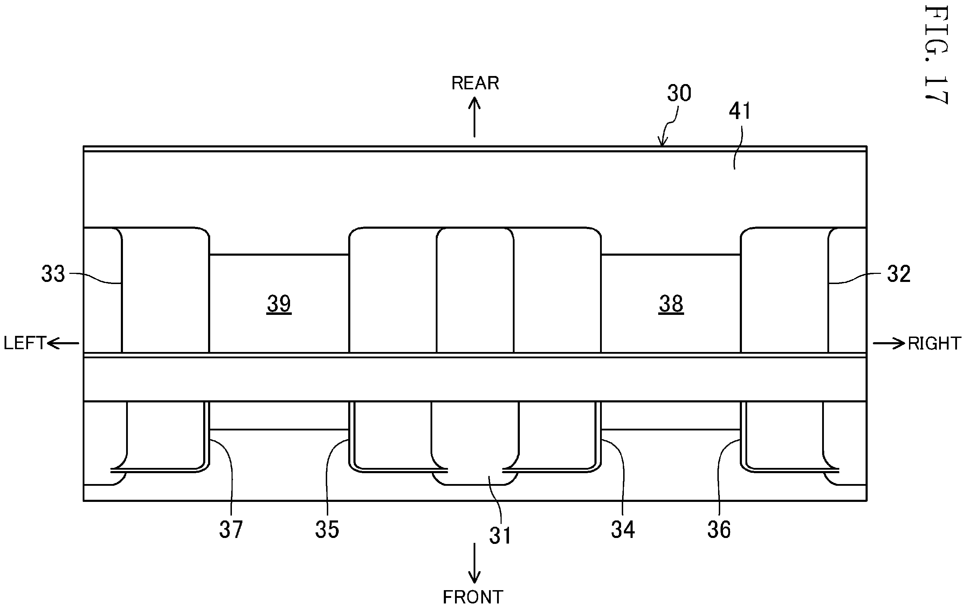

[FIG. 17] FIG. 17 is a bottom view of the baffle according to the second embodiment.

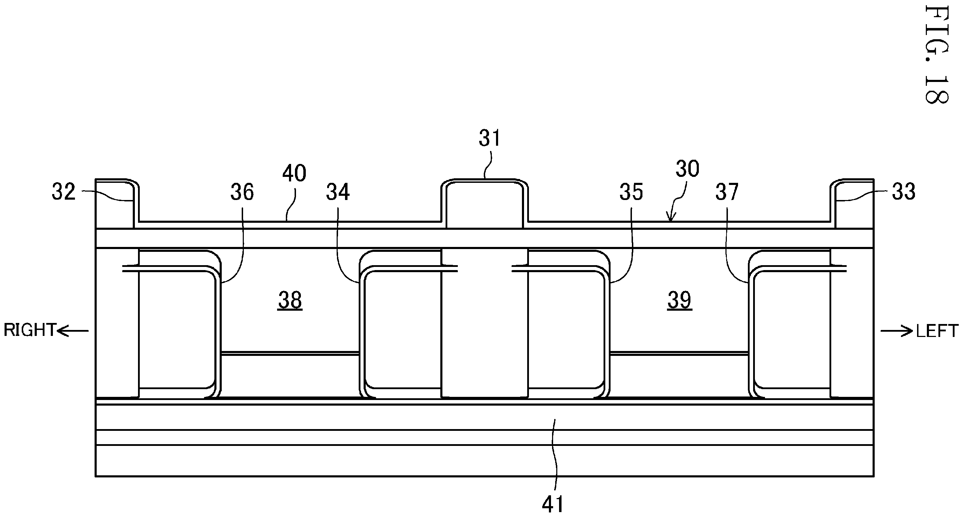

[FIG. 18] FIG. 18 is a view of the baffle according to the second embodiment as viewed from the front side.
[FIG. 19] FIG. 19 is a vertical cross-sectional view taken along a line passing through a right warm and clod air mixing passage of a baffle in a vehicle air conditioner according to a third embodiment.
[FIG. 20] FIG. 20 is a vertical cross-sectional view taken along a line passing through a middle right cold air guide tube of the baffle in the vehicle air conditioner according to the third embodiment.
[FIG. 21] FIG. 21 is a vertical cross-sectional view taken along a line passing through a central warm air guide tube of the baffle in the vehicle air conditioner according to the third embodiment.

### DESCRIPTION OF EMBODIMENTS

Embodiments of the present disclosure will now be described in detail with reference to the drawings. The following description of preferred embodiments is only an example in nature, and is not intended to limit the scope, applications or use of the present invention as defined in the appended claims.

### (First Embodiment)

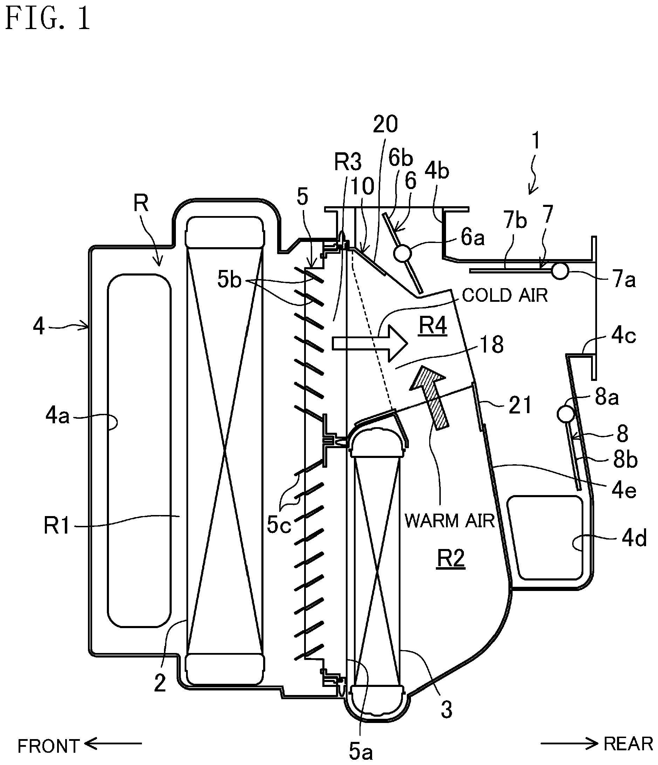

FIGS. 1 to 3 illustrate a vehicle air conditioner 1 according to a first embodiment of the present disclosure. This vehicle air conditioner 1 is housed in an instrument panel (not shown) arranged in a front end of a cabin of a vehicle, and is configured to be capable of supplying air-conditioning air, of which temperature has been adjusted, to each component of the vehicle, which is not shown. The vehicle air conditioner 1 is arranged in a substantially central portion of the vehicle in the widthwise direction.

For easy understanding, in the following description of the embodiment, the front, rear, left, and right sides of the vehicle will be simply referred to as the "front," "rear," "left," and "right," respectively.

The vehicle air conditioner 1 includes a blower unit (not shown). The blower unit has a well-known configuration capable of selecting and sending air inside a cabin (inside air) or air outside the cabin (outside air), which is not described in detail below. The blower unit includes an inside/outside air damper, a blower fan, a fan drive motor, and other components. The inside/outside air damper is operated to make switching between an inside-air circulating mode in which only inside air is blown as air-conditioning air and an outside-air introducing mode in which only outside air is blown as air-conditioning air.

The vehicle air conditioner 1 includes: a cooling heat exchanger 2 cooling air-conditioning air; a heating heat exchanger 3 heating air-conditioning air; a casing 4 housing the cooling heat exchanger 2 and the heating heat exchanger 3; an air mix damper 5; a defrost damper 6; a vent damper 7; a heat damper 8; and a baffle 10. The cooling heat exchanger 2 is configured as a heat pump refrigerant evaporator (evaporator). The cooling heat exchanger 2 is connected to a cooling pipe which is not shown, and into which a refrigerant that has passed through an expansion valve (not shown) is introduced. The refrigerant introduced passes through a plurality of tubes (not shown) included in the cooling heat exchanger 2, and at that time, exchanges heat with air-conditioning air flowing outside via a fin (not shown) to cool the air-conditioning air.

The heating heat exchanger 3 is comprised of a heater core in which cooling water cooling an engine mounted on the vehicle circulates. The heating heat exchanger 3 is connected to a heating pipe which is not shown. The engine cooling water introduced into the heating heat exchanger 3 passes through a plurality of tubes (not shown) included in the heating heat exchanger 3, and at that time, exchanges heat with air-conditioning air flowing outside via a fin (not shown) to heat the air-conditioning air.

The heating heat exchanger 3 is smaller than the cooling heat exchanger 2. That is to say, the vertical dimension (length) of the heating heat exchanger 3 is set to be shorter than that of the cooling heat exchanger 2, and specifically, the vertical dimension of the heating heat exchanger 3 is approximately half that of the cooling heat exchanger 2. The dimension (thickness) of the heating heat exchanger 3 in a direction in which air passes is set to be shorter than that of the cooling heat exchanger 2.

The casing 4 is made of a plurality of members comprised of, e.g., a resin material. A front portion of the right side wall of the casing 4 is provided with an air inlet 4a connected to the blower unit. This air inlet 4a is vertically long.

A portion of the top wall of the casing 4 behind the central portion thereof in the lengthwise direction is provided with a defrost outlet 4b. The defrost outlet 4b is widthwise long. The defrost outlet 4b is connected to the upstream end of a defrost duct (not shown) disposed inside the instrument panel. The downstream end of the defrost duct is connected to a defrost nozzle (not shown) formed in the top wall of the instrument panel. The defrost nozzle is provided to supply an air-conditioned wind toward the interior surface of a front window glass (not shown) of the vehicle, and is widthwise long.

An upper portion of the rear wall of the casing 4 is provided with a vent outlet 4c which is positioned below the defrost outlet 4b. The vent outlet 4c is provided to the central portion (center vent) of the casing 4 in the widthwise direction (hereinafter referred to as "the central vent outlet 4c"), a left side (side vent) of the casing 4 (hereinafter referred to as "the left vent outlet 4c"), and a right side (side vent) of the casing 4 (hereinafter referred to as "the right vent outlet 4c"). The vent outlet 4c is connected to the upstream end of a vent duct (not shown) disposed inside the instrument panel. The central vent outlet 4c in the widthwise direction is connected to a center vent nozzle disposed in the central portion of the instrument panel in the widthwise direction through a vent duct. The left vent outlet 4c is connected to a side vent nozzle provided to the left side of the instrument panel through a vent duct. The right vent outlet 4c is connected to a side vent nozzle provided to the right side of the instrument panel through a vent duct. Each of the vent nozzles is provided to supply an air-conditioned wind to the upper half of a passenger's body in the front sheet.

A lower portion of the rear wall of the casing 4 is provided with a heat outlet 4d which is positioned below the defrost outlet 4b and the vent outlet 4c. The heat outlet 4d is provided to supply an air-conditioned wind to a space adjacent to the passenger's feet. The heat outlet 4d can be connected to, e.g., a heating duct.

The interior of the casing 4 is provided with an air passage R. The air passage R has an upstream end connected to the air inlet 4a, and a downstream end connected to the defrost outlet 4b, the vent outlet 4c, and the heat outlet 4d. That is to say, the air passage R has a cold air passage R1, a warm air passage R2, a bypass passage R3, and an air mixing space R4. The cold air passage R1 is comprised of the upper portion of the air passage R, is connected to the air inlet 4a, and extends rearward. The cooling heat exchanger 2 is disposed midway of this cold air passage R1, and all the air-conditioning air flowing through the cold air passage R1 passes through the cooling heat exchanger 2. The cooling heat exchanger 2 is disposed such that its tube extends vertically, and the cooling heat exchanger 2 has an upper end positioned in the upper portion of the casing 4 and a lower end positioned in the lower portion of the casing 4.

The downstream portion of the cold air passage R1 is vertically divided into upper and lower parts, and its lower part of the downstream portion of the cold air passage R1 communicates with the upstream portion of the warm air passage R2. The warm air passage R2 is disposed in the lower portion of the casing 4, extends rearward from the portion communicating with the cold air passage R1, and is bent and extends upward. The downstream end of the warm air passage R2 is disposed adjacent to the central portion of the interior of the casing 4 in the vertical direction. The heating heat exchanger 3 is disposed in a portion (the upstream portion) of the warm air passage R2 extending rearward, and all the air-conditioning air passing through the warm air passage R2 passes through the heating heat exchanger 3. The heating heat exchanger 3 is disposed such that its tube extends vertically.

The heating heat exchanger 3 is spaced apart from the cooling heat exchanger 2 with a predetermined distance. This predetermined distance is set to be smaller than that in a conventional vehicle air conditioner. The air mix damper 5 is disposed between the heating heat exchanger 3 and the cooling heat exchanger 2. The lower end of the heating heat exchanger 3 is disposed below the lower end of the cooling heat exchanger 2. The upper end of the heating heat exchanger 3 is positioned at substantially the same height as the central portion of the cooling heat exchanger 2 in the vertical direction.

The upper part of the upstream portion of the cold air passage R1 communicates with the upstream portion of the bypass passage R3. The bypass passage R3 is a passage branched from the downstream portion of the cold air passage R1 and bypassing the warm air passage R2. The bypass passage R3 is set to be shorter than the warm air passage R2, and extends rearward above the warm air passage R2. Therefore, the bypass passage R3 extends rearward at its downstream side while the warm air passage R2 extends upward at its downstream side, i.e., they extend in directions intersecting each other.

The air mixing space R4 is disposed above the downstream portion of the warm air passage R2. The lower portion of the air mixing space R4 communicates with the downstream end of the warm air passage R2, and the front portion of the air mixing space R4 communicates with the downstream end of the bypass passage R3. Warm air flows upward to flow into the air mixing space R4, whereas cold air flows rearward to flow into the air mixing space R4. The warm air passage R2 and the bypass passage R3 join together in the air mixing space R4. The upper portion of the air mixing space R4 communicates with the defrost outlet 4b. The rear portion of the air mixing space R4 communicates with the vent outlet 4c. The lower rear portion of the air mixing space R4 communicates with the heat outlet 4d.

The defrost damper 6 includes a rotating shaft 6a disposed above the casing 4 and extending widthwise, and a closing plate portion 6b extending radially from rotating shaft 6a. The closing plate portion 6b rotates around the rotating shaft 6a to open/close the defrost outlet 4b. Likewise, the vent damper 7 includes a rotating shaft 7a and a closing plate portion 7b, and the closing plate portion 7b rotates around the rotating shaft 7a to open/close the vent outlet 4c. Likewise, the heat damper 8 includes a rotating shaft 8a and a closing plate portion 8b, and the closing plate portion 8b rotates around the rotating shaft 8a to open/close the heat outlet 4d.

The defrost damper 6, the vent damper 7, and the heat damper 8 link with one another using a link mechanism which is not shown. Opening/closing operations of the defrost damper 6, of the vent damper 7, and of the heat damper 8 allow the blowout mode of the vehicle air conditioner 1 to switch among, e.g., a defrost mode, a vent mode, a heating mode, a bi-level mode, or a defrost heating mode. In the defrost mode, the defrost damper 6 is opened, and the vent damper 7 and the heat damper 8 are closed to supply an air-conditioned wind to mainly the defrost outlet 4b. In the vent mode, the defrost damper 6 is slightly opened or closed, the vent damper 7 is opened, and the heat damper 8 is closed to supply an air-conditioned wind to mainly the vent outlet 4c. In the heating mode, the defrost damper 6 is slightly opened or closed, the vent damper 7 is closed, and the heat damper 8 is opened to supply an air-conditioned wind to mainly the heat outlet 4d. In the bi-level mode, the defrost damper 6 is slightly opened or closed, the vent damper 7 and the heat damper 8 are opened to supply an air-conditioned wind to mainly the vent outlet 4c and the heat outlet 4d. In the defrost heating mode, the vent damper 7 is closed, and the defrost damper 6 and the heat damper 8 are opened to supply an air-conditioned wind to mainly the defrost outlet 4b and the heat outlet 4d.

The air mix damper 5 is a damper disposed inside the casing 4 and adjusting the amount of warm air flowing into the air mixing space R4 from the downstream portion of the warm air passage R2 and an amount of cold air flowing into the air mixing space R4 from the downstream portion of the bypass passage R3. In this embodiment, the air mix damper 5 is configured as a louver damper capable of shortening the dimension thereof in the lengthwise direction. That is to say, the air mix damper 5 is disposed between the heating heat exchanger 3 and the cooling heat exchanger 2, and is spaced apart from the heating heat exchanger 3 and the cooling heat exchanger 2. The air mix damper 5 includes a frame member 5a fixed to the inner surface of the casing 4, a plurality of upper louvers 5b and a plurality of lower louvers 5c which are rotatably supported by the frame member 5a. The frame member 5a is substantially rectangular-shaped so as to be along the bottom wall, top wall, left side wall, and right side wall of the casing 4. Providing the plurality of upper louvers 5b and the plurality of lower louvers 5c can enlarge the area of the passage of opened/closed by the air mix damper 5 while reducing the size of each of the louvers 5b and 5c. This can shorten the dimension of the air mix damper 5 in the lengthwise direction to make the air mix damper 5 thinner.

The upper louvers 5b open/close the upstream end of the bypass passage R3. The upper louvers 5b extend widthwise, and are vertically aligned with one another, and rotating shafts (not shown) provided to both left and right ends are supported relative to left and right sides of the frame member 5a. All the upper louvers 5b link together, and the upper louvers 5b rotate since a state where the upstream end of the bypass passage R3 is opened as shown in FIG. 1 until a state the upstream end of the bypass passage R3 is closed (not shown). The upper louvers 5b can be fixed at any position as long as they rotate within the above rotation range. This can substantially steplessly adjust the amount of cold air flowing into the air mixing space R4 from the downstream portion of the bypass passage R3. The upper louvers 5b are inclined so as to be positioned downward toward the downstream of the air flow (direction) when the upstream end of the bypass passage R3 is opened.

The lower louvers 5c open/close the upstream end of the warm air passage R2. The lower louvers 5c extend widthwise, and are vertically aligned with one another, and rotating shafts (not shown) provided to both left and right ends are supported relative to left and right sides of the frame member 5a. All the lower louvers 5c link together, and the lower louvers 5c rotate since a state where the upstream end of the warm air passage R2 is opened as shown in FIG. 1 until a state the upstream end of the warm air passage R2 is closed (not shown). The lower louvers 5c can be fixed at any position as long as they rotate within the above rotation range. This can substantially steplessly adjust the amount of warm air flowing into the air mixing space R4 from the downstream side of the warm air passage R2. The lower louvers 5c are inclined so as to be positioned upward toward the downstream end of the air flow (direction) when the upstream of the warm air passage R2 is opened. The upper louvers 5b and lower louvers 5c can link together by, e.g., an actuator (not shown).

The vehicle air conditioner 1 is automatically controlled. For example, a target air-blowing temperature is determined based on a temperature set by a passenger, a cabin inside temperature, a cabin outside temperature, a quantity of solar radiation, and other factors, and the air mix damper 5 is operated to reach the target air-blowing temperature. The blowout mode is basically switched to the vent mode during cooling, and is basically switched to the heating mode during heating. The blowout mode is also switched to, e.g., the bi-level mode or the defrost heating mode according to heating or cooling strength. If the passenger operates a defrost switch, the blowout mode is switched to the defrost mode. The present disclosure is applicable to a manually operated vehicle air conditioner 1 in which the passenger directly performs switching of the blowout mode or temperature adjustment.

As shown in FIGS. 1 to 3, the baffle 10 is disposed inside the casing 4 at least at a position where the flow of warm air and the flow of cool air join together, and guides both the warm air and the cold air in a predetermined direction. In this embodiment, the baffle 10 is disposed along the air mixing space R4 where warm air and cold air join together and the downstream portion of the bypass passage R3.

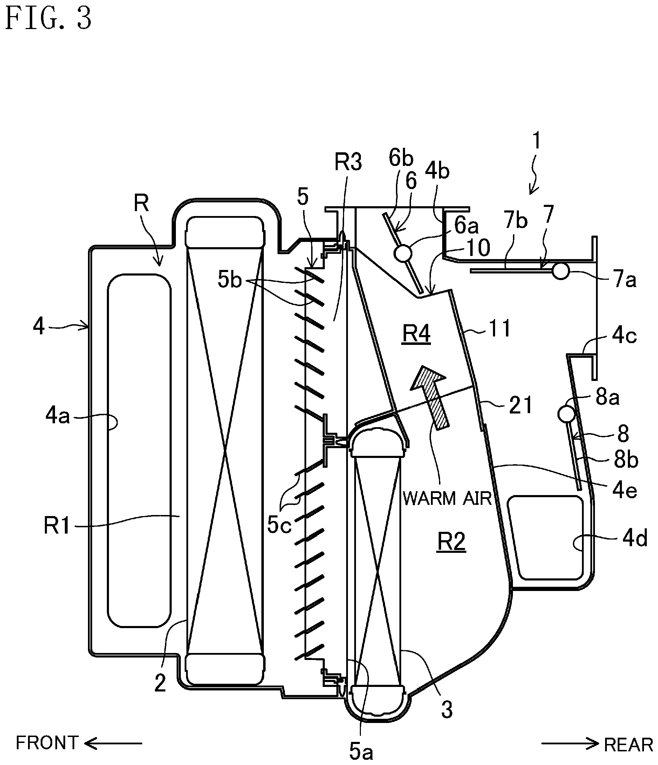

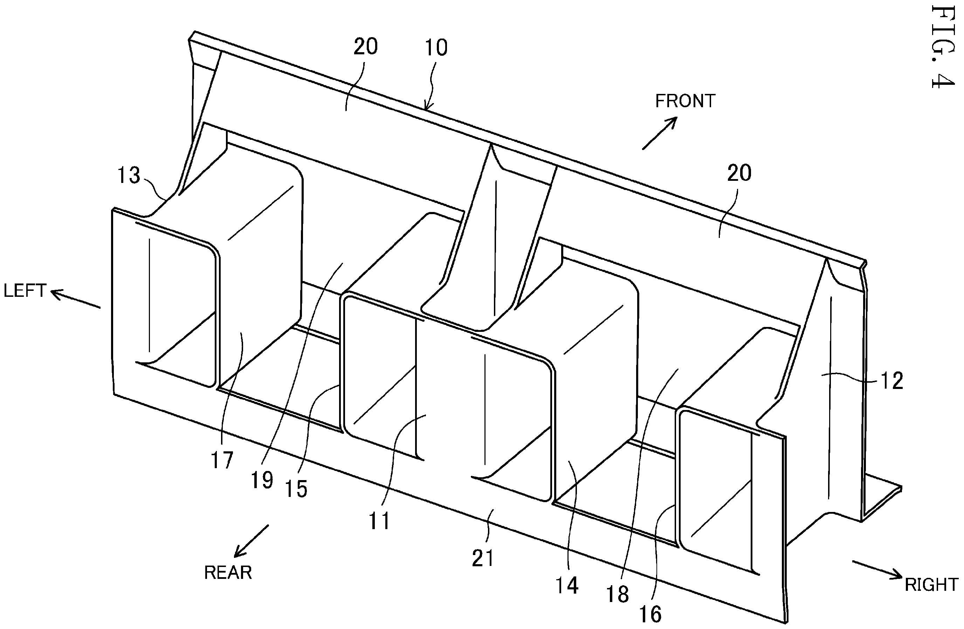

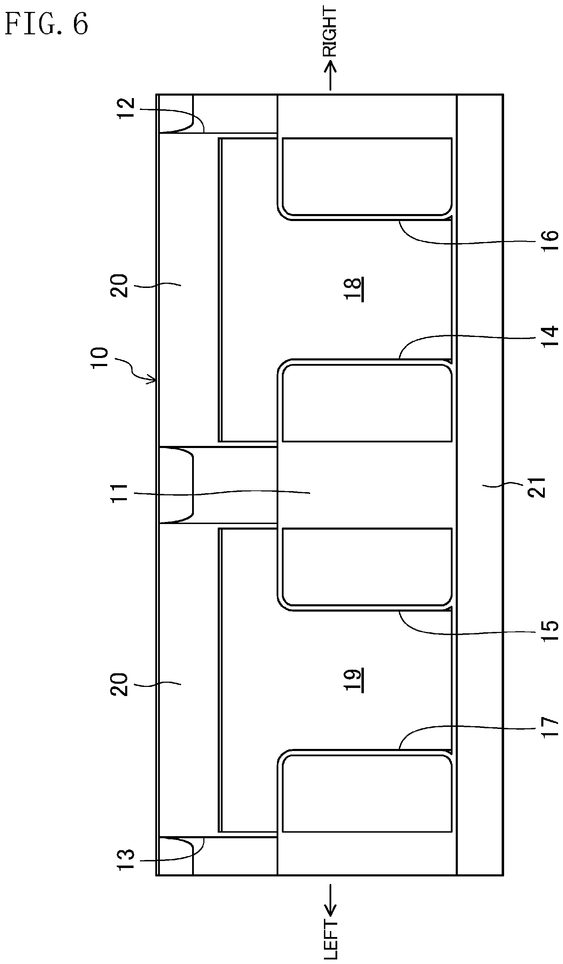

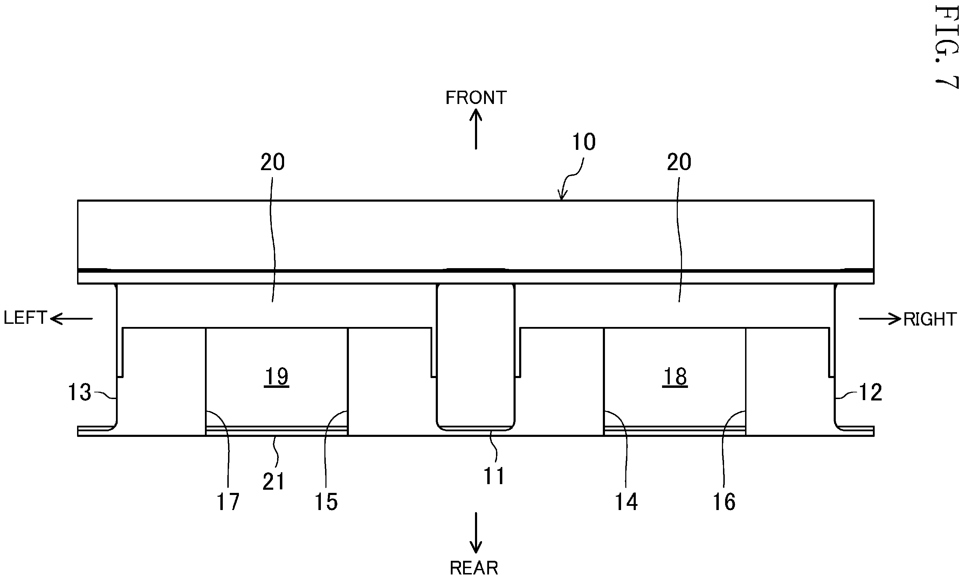

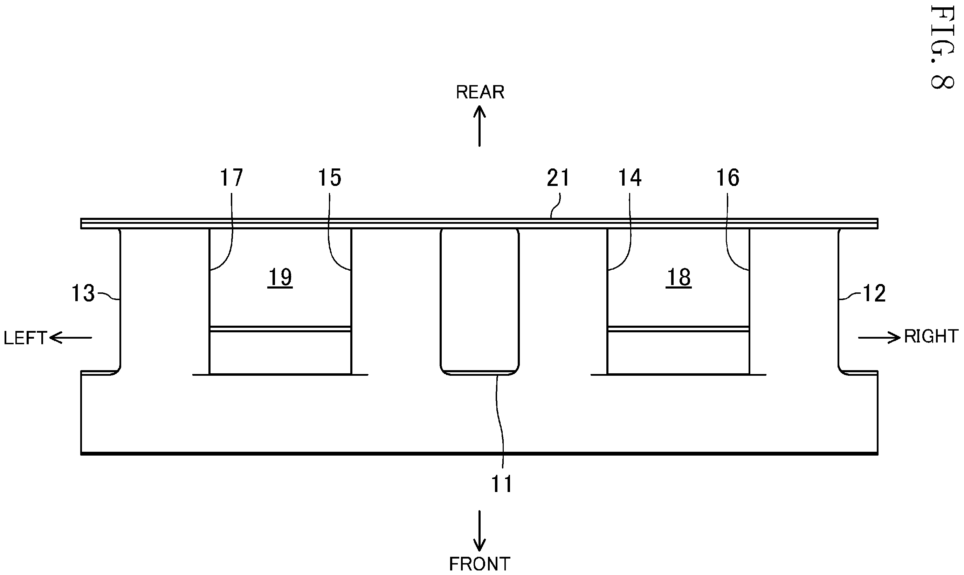

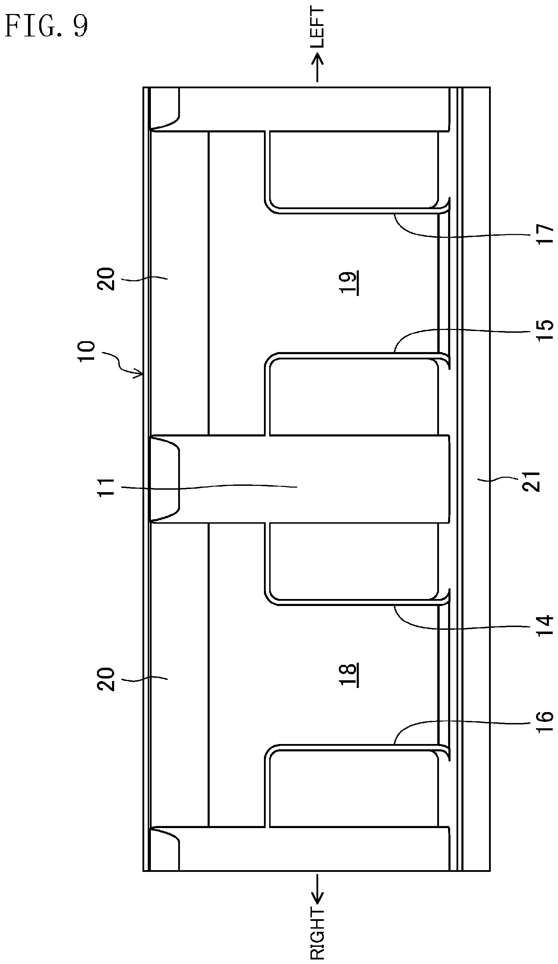

As shown in FIGS. 4 and 6 to 9, the baffle 10 is made of, e.g., a resin molding, and is widthwise long. As shown in FIG. 3, the central portion of the baffle 10 in the widthwise direction is provided with a central warm air guide tube (warm air guide) 11 extending vertically and guiding the warm air which has flowed through the warm air passage R2 toward the defrost outlet 4b. The central warm air guide tube 11 is a square tube having a long cross section in the lengthwise direction. Alternatively, it may have a circular or oval cross-section.

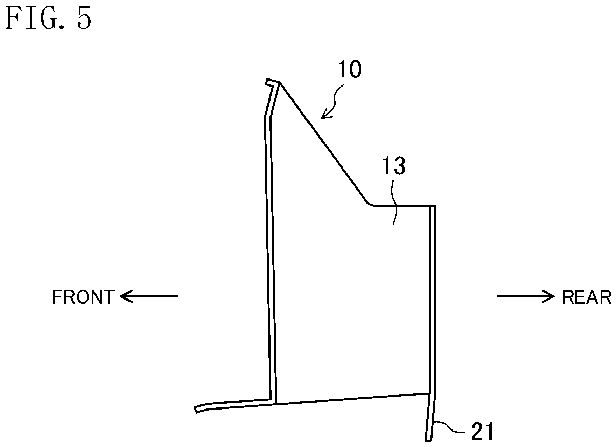

As shown in FIG. 5, the upper end of the central warm air guide tube 11 is inclined upward toward the front. Both vertical ends of the central warm air guide tube 11 are open to allow warm air to pass through the central warm air guide tube 11. In this embodiment, the baffle 10 is formed by a single member. However, this is only an exemplary embodiment of the present disclosure. The baffle 10 may be formed by combination of a plurality of members.

The right side of the baffle 10 is provided with a right warm air guide recess (warm air guide) 12 guiding the warm air which has flowed through the warm air passage R2 toward the defrost outlet 4b. The right warm air guide recess 12 is recessed toward the left, and extends vertically. The left side of the baffle 10 is provided with a left warm air guide recess (warm air guide) 13 guiding the warm air which has flowed through the warm air passage R2 toward the defrost outlet 4b. The left warm air guide recess 13 is recessed toward the right, and extends vertically. Thus, the interior of the casing 4 is provided with the three warm air guides spaced apart from one another in the widthwise direction. This configuration can guide warm air toward a predetermined direction in the three positions, namely, the central portion, and the light and left sides.

The upper edge of the right warm air guide recess 12 and the upper edge of the left warm air guide recess 13 are inclined upward toward the front. Both vertical ends of the right warm air guide recess 12 and both vertical ends of the left warm air guide recess 13 are open to allow warm air to pass through the right warm air guide recess 12 and the left warm air guide recess 13. The dimension of the right warm air guide recess 12 and the dimension of the left warm air guide recess 13 in the lengthwise direction (the widths of the recesses) are set to be longer than those in the widthwise direction (the depths of the recesses). With the baffle 10 assembled to the interior of the casing 4, the right warm air guide recess 12 and the left warm air guide recess 13 are respectively closed by an inner surface of the right side wall and an inner surface of the left side wall of the casing 4 to form a passage having a closed cross section. Instead of the right warm air guide recess 12 and the left warm air guide recess 13, vertically extending tubes like the central warm air guide tube 11 may be provided.

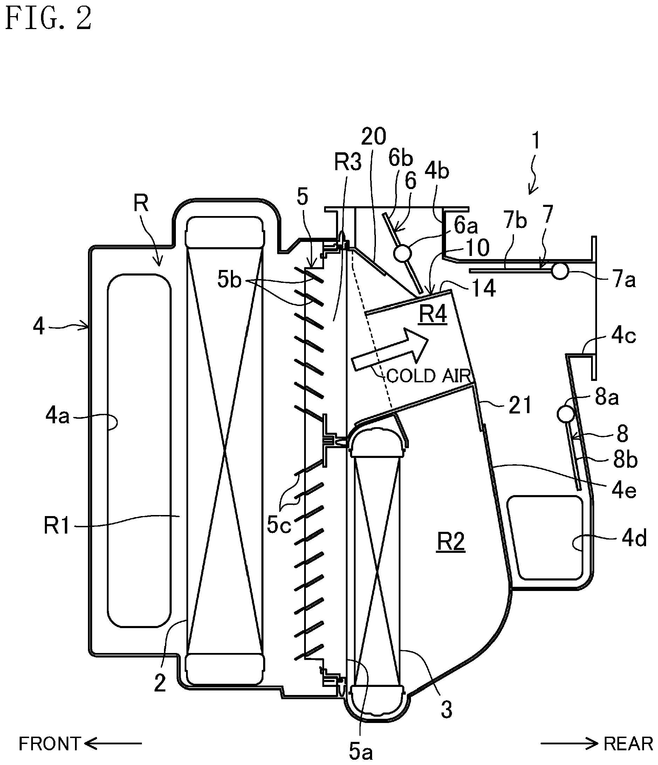

The baffle 10 includes a middle right cold air guide tube 14 on the right of the central warm air guide tube 11, and a middle left cold air guide tube 15 on the left of the central warm air guide tube 11. As shown in FIG. 2, the middle right cold air guide tube 14 and the middle left cold air guide tube 15 is cold air guides guiding the cold air which has flowed through the bypass passage R3 toward the vent outlet 4c in the central portion in the widthwise direction, and extends lengthwise. That is to say, the middle right cold air guide tube 14 and the middle left cold air guide tube 15 extend in a different direction from direction in which the central warm air guide tube 11, the right warm air guide recess 12, and the left warm air guide recess 13 extend. The middle right cold air guide tube 14 and the middle left cold air guide tube 15 have a substantially rectangular cross-section in the vertical direction.

The right side of the baffle 10 is provided with a right cold air guide tube 16 that is on the right of the middle right cold air guide tube 14 with a space therefrom. The right cold air guide tube 16 is unified with the portion where the right warm air guide recess 12 is formed. The left side of the baffle 10 is provided with a left cold air guide tube 17 that is on the left of the middle left cold air guide tube 15 with a space therefrom. The left cold air guide tube 17 is unified with the portion where the left warm air guide recess 13 is formed. The right cold air guide tube 16 and the left cold air guide tube 17 are cold air guides guiding the cold air which has flowed through the bypass passage R3 toward the right vent outlet 4c and the left vent outlet 4c, respectively. Just like the middle right cold air guide tube 14 and the middle left cold air guide tube 15, the right cold air guide tube 16 and the left cold air guide tube 17 extend lengthwise, and have a substantially rectangular cross-section in the vertical direction.

The central warm air guide tube 11, the middle right cold air guide tube 14, and the middle left cold air guide tube 15 are provided so as to be adjacent to one another in the widthwise direction. This can downsize the baffle 10. A portion of the right warm air guide recess 12 and a portion of the right cold air guide tube 16 are adjacent to each other in the widthwise direction, and a portion of the left warm air guide recess 13 and a portion of the left cold air guide tube 17 are adjacent to each other in the widthwise direction. This can also downsize the baffle 10.

The middle right cold air guide tube 14, the middle left cold air guide tube 15, the right cold air guide tube 16, and the left cold air guide tube 17 have substantially the same length, and have substantially the same cross section. In the interior of the casing 4, these four cold air guides are disposed to be spaced apart from one another in the widthwise direction.

The middle right cold air guide tube 14, the middle left cold air guide tube 15, the right cold air guide tube 16, and the left cold air guide tube 17 are provided to at least the lower portion of the baffle 10, and stretch toward an upper portion of the baffle 10. The space between the middle right cold air guide tube 14 and the right cold air guide tube 16 of the baffle 10 is provided with a right air mixing passage 18 for mixing the warm air which has flowed through the warm air passage R2 and the cold air which has flowed through the bypass passage R3 together (hereinafter referred to as "the right warm and clod air mixing passage 18"), as shown in FIG. 1. The space between the middle left cold air guide tube 15 and the left cold air guide tube 17 of the baffle 10 is provided with a left air mixing passage 19 for mixing the warm air which has flowed through the warm air passage R2 and the cold air which has flowed through the bypass passage R3 together (hereinafter referred to as "the left warm and clod air mixing passage 19"), as shown in FIG. 4.

The right warm and clod air mixing passage 18 and the left warm and clod air mixing passage 19 are positioned inside the air mixing space R4, and has an upstream portion communicating with the downstream end of the warm air passage R2 and the downstream end of the bypass passage R3, and a downstream portion opening rearward and upward in the inside of the air mixing space R4.

The middle right cold air guide tube 14, the middle left cold air guide tube 15, the right cold air guide tube 16, and the left cold air guide tube 17 are positioned adjacent to the upstream portion (the lower portion) of the right warm and cold air mixing passage 18 and the upstream portion (the lower portion) of the left warm and clod air mixing passage 19 of the baffle 10 in the flow direction of the air. The upstream portion of the right warm and clod air mixing passage 18 and the upstream portion of the left warm and clod air mixing passage 19 in the air flow direction are narrower than the downstream portions thereof.

The upper portion of the baffle 10 is provided with cold-air-side plate portions 20, 20 extending downward toward the rear and guiding the cold air, which has flowed through the bypass passage R3, downward. The cold-air-side plate portions 20, 20 are disposed so as to sandwich the central warm air guide tube 11. When the casing 4 is viewed from above, the cold-air-side plate portions 20, 20 are disposed so as to be located internal of the defrost outlet 4b. This can allow the cold-air-side plate portions 20, 20 to reliably guide cold air to a direction away from the defrost outlet 4b.

On the other hand, the lower portion of the baffle 10 is provided with a warm-air-side plate portion 21 extending downward and substantially preventing the warm air which has flowed through the warm air passage R2 from flowing toward the heat outlet 4d. The lower end of the warm-air-side plate portion 21 is in contact with an upper portion of a defining wall 4e disposed inside the casing 4 and extending upward from the bottom wall thereof. The defining wall 4e is disposed between the heat outlet 4d and the warm air passage R2, and extends upward to be taller than the heat outlet 4d. The warm-air-side plate portion 21 of the baffle 10 and the defining wall 4e of the casing 4 are continuously formed, reliably allowing warm air to flow upward.

Next, the operation of the vehicle air conditioner 1 having the above configuration will be described. The air-conditioning air flowing through the cold air passage R1 is cooled by the cooling heat exchanger 2 by passing through the cooling heat exchanger 2 to become cold air. When flowing through the warm air passage R2, this cold air is heated by the heating heat exchanger 3 by passing through the heating heat exchanger 3 to become warm air. When flowing through the bypass passage R3, this cold air flows toward the downstream thereof while maintaining its clod state. Then, the air mix damper 5 is operated to adjust the amount of warm air and the amount of cold air which flow in the air mixing space R4 to generate an air-conditioned wind with a desired temperature in the air mixing space R4. During a full cold operation, the amount of a wind flowing through the warm air passage R2 is substantially zero, whereas, during a full hot operation, the amount of a wind flowing through the bypass passage R3 is substantially zero. During a middle operation between the full cold operation and the full hot operation, air-conditioning air flows through the warm air passage R2 and the bypass passage R3.

If temperature control is in the middle level, specifically, with reference to a vertical cross-sectional view of the baffle 10 taken along a line passing through the right warm and clod air mixing passage 18 as shown in FIG. 1, the warm air which has flowed through the warm air passage R2 flows upward to flow in the right warm and clod air mixing passage 18 of the baffle 10, and the cold air which has flowed through the bypass passage R3 flows rearward to flow in the right warm and clod air mixing passage 18. At that time, the warm air and the cold air flow in directions intersecting with each other, and thus, the warm air and the cold air collide with each other to generate an air-conditioned wind. Such an air-conditioned wind is also generated in the left warm and clod air mixing passage 19 in the same or similar manner. The generated air-conditioned wind is supplied to the defrost outlet 4b, the vent outlet 4c, and/or the heat outlet 4d according to the blowout mode. In FIG. 1, arrows schematically indicate the flow of the cold air and the flow of the warm air.

At that time, as shown in FIG. 2, with reference to a vertical cross sectional view of the baffle 10 taken along a line passing through the middle right cold air guide tube 14 in the vehicle air conditioner 1, the cold air which has flowed through the bypass passage R3 flows rearward to flow in the middle right cold air guide tube 14 of the baffle 10, and is guided by the middle right cold air guide tube 14 toward the vent outlet 4c. This powerful cold air which has not passed through the heating heat exchanger 3 is less likely to flow toward the defrost outlet 4b. The middle left cold air guide tube 15, the right cold air guide tube 16, and the left cold air guide tube 17 can also guide cold air in the same or similar manner.

In addition, as shown in FIG. 3, with reference to a vertical cross sectional view of the baffle 10 taken along a line passing through the central warm air guide tube 11 in the vehicle air conditioner 1, the warm air which has flowed through the warm air passage R2 flows upward to flow in the central warm air guide tube 11 of the baffle 10, and is guided by the central warm air guide tube 11 toward the defrost outlet 4b. This can sufficiently supply warm air to the defrost outlet 4b. The right warm air guide recess 12 and the left warm air guide recess 13 can also guide warm air in the same or similar manner. This substantially prevents a drop in temperature of the air-conditioned wind blown out of the defrost outlet 4b.

Also, cold air is guided toward the vent outlet 4c by the middle right cold air guide tube 14, the middle left cold air guide tube 15, the right cold air guide tube 16, and the left cold air guide tube 17 of the baffle 10. Thus, during the vent mode mainly selected in summer, the temperature of the air-conditioned wind blown out of the vent outlet 4c becomes low, and the air-conditioned wind with a low temperature can be sufficiently supplied.

The middle right cold air guide tube 14, the middle left cold air guide tube 15, the right cold air guide tube 16, and the left cold air guide tube 17 are disposed in a lower portion of the baffle 10, and thus, these guide tubes 14 to 17 efficiently guide the cold air to the vent outlet 4b.

A flow channel at the upstream portion of the right warm and clod air mixing passage 18 and a flow channel at the upstream portion of the left warm and clod air mixing passage 19 in the air flow direction are narrowed by the middle right cold air guide tube 14, the middle left cold air guide tube 15, the right cold air guide tube 16, and the left cold air guide tube 17. This enhances the flow rate of the warm air flowing into the right warm and clod air mixing passage 18 and the left warm and clod air mixing passage 19, facilitating mixing with cold air. Further, warm air tends to easily flow into the central warm air guide tube 11, the right warm air guide recess 12, and the left warm air guide recess 13. As a result, the advantage obtained by the central warm air guide tube 11, the right warm air guide recess 12, and the left warm air guide recess 13 becomes outstanding.

The cold air which has flowed through the bypass passage R3 is guided by the cold-air-side plate portions 20, 20 of the baffle 10 so as to be away from the defrost outlet 4b, and thus, the cold air is less likely to flow toward the defrost outlet 4b, substantially preventing a drop in temperature of the air-conditioned wind blown out of the defrost outlet 4b.

The baffle 10 is provided with the warm-air-side plate portion 21. Thus, the warm air which has flowed through the warm air passage R2 is less likely to be leaked out of the lower portion of the baffle 10 toward the heat outlet 4d. As a result, the advantage of guiding the warm air by the baffle 10 can be obtained, sufficiently.

The baffle 10 is provided with the right cold air guide tube 16 and the left cold air guide tube 17. Thus, cold air can be guided to the left and right vent outlets 4c in the widthwise direction disadvantageous for wind distribution. This makes it possible to sufficiently supply the cold air from the left and right vent outlets 4c in the widthwise direction.

As can be seen from the foregoing description, according to the vehicle air conditioner 1 of the first embodiment, the baffle 10 disposed at a position in which the flow of warm air and the flow of cold air join each other can guide the warm air which has flowed through the warm air passage R2 toward the defrost outlet 4b, and the cold air which has flowed through the bypass passage R3 toward the vent outlet 4c. This makes it possible to appropriately adjust the temperature of the air-conditioned wind blown out of the defrost outlet 4b and the temperature of the air-conditioned wind blown out of the vent outlet 4c. This can accurately control the temperature to improve comfort.

The present disclosure is particularly useful when the blowout mode is in the defrost heating mode. In the defrost heating mode, air-conditioned wind is supplied to not only the defrost outlet 4b but also the heat outlet 4d. Thus, in the interior of the casing 4, air-conditioned wind flows in upper and lower directions in the downstream portion. At that time, the bypass passage R3 is disposed at the upper portion, and thus, cold air tends to flow toward the defrost outlet 4b. In contrast, the warm air passage R2 is disposed at the lower portion, and thus, warm air tends to flow toward the heat outlet 4d. This enlarges the temperature difference, i.e., the temperature difference between the air-conditioned wind supplied to the defrost outlet 4b (low) and the air-conditioned wind supplied to the heat outlet 4d (high), and may affect comfort. However, according to the present disclosure, the baffle 10 can increase the temperature of the air-conditioned wind to be supplied to the defrost outlet 4b, and thus, this can reduce the temperature difference between the air-conditioned wind supplied to the defrost outlet 4b and the air-conditioned wind supplied to the heat outlet 4d, improving comfort.

Changing the cross-sectional areas of the central warm air guide tube 11, of right warm air guide recess 12, and of left warm air guide recess 13 can easily adjust the amount of the warm air guided toward the defrost outlet 4b. Changing the cross-sectional areas of the middle right cold air guide tube 14, of the middle left cold air guide tube 15, of the right cold air guide tube 16, and of the left cold air guide tube 17 can easily adjust the amount of the cold air guided toward the vent outlet 4c.

Any one or two of the central warm air guide tube 11, the right warm air guide recess 12 or the left warm air guide recess 13 may be omitted. Any one or more of the middle right cold air guide tube 14, the middle left cold air guide tube 15, the right cold air guide tube 16, or the left cold air guide tube 17 may be omitted.

### (Second Embodiment)

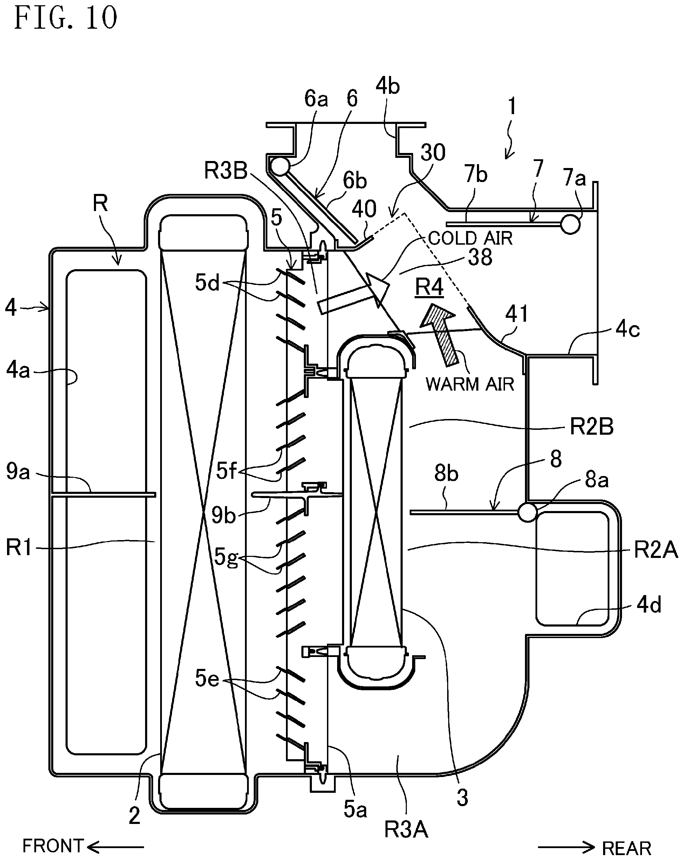

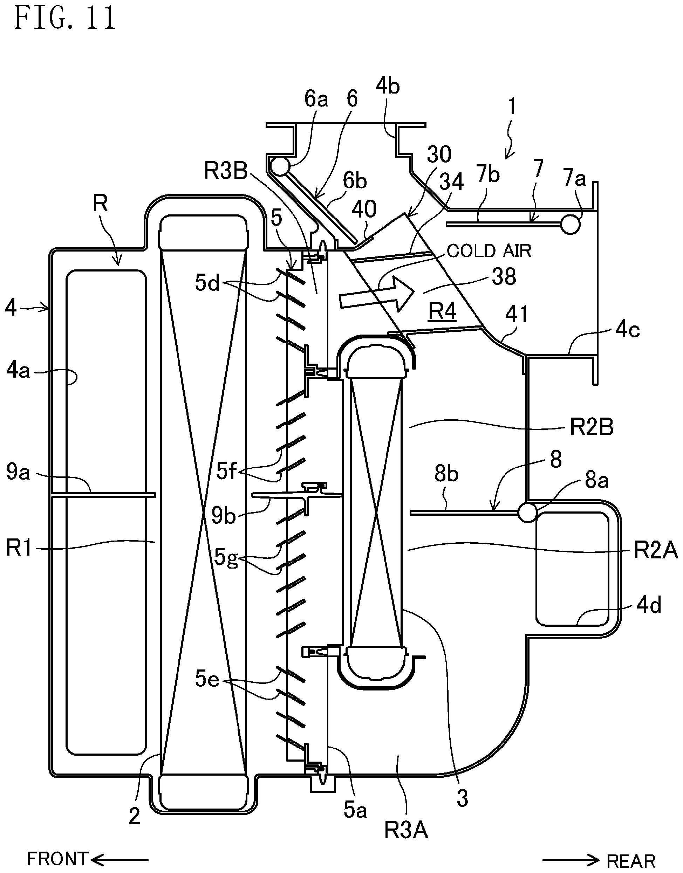

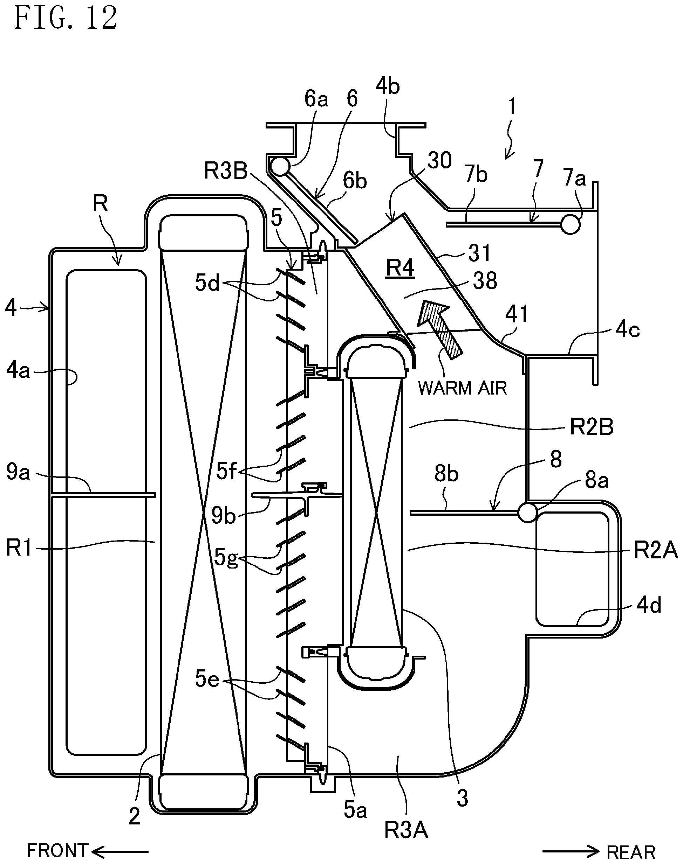

FIGS. 10 to 12 illustrate a vehicle air conditioner 1 according to a second embodiment of the present disclosure. The vehicle air conditioner 1 of the second embodiment is the same as that in the first embodiment, except that the vehicle air conditioner 1 of the second embodiment is an inside and outside two-layer air flow type. In the following description, the components that have been described in the first embodiment are designated by the same reference characters, and are not described in detail. The following description will focus on only differences from the first embodiment.

Although not shown, the blower unit of the second embodiment can switch among the inside-air circulating mode, the outside-air introducing mode, and an inside and outside two-layer air flow mode in which inside and outside air are simultaneously introduced. This blower unit is utilized in a conventional vehicle air conditioner of the inside and outside two-layer air flow type, and its specific illustration will be omitted. During the inside and outside two-layer air flow mode, inside air and outside air flow in different passages. Switching among the inside-air circulating mode, the outside-air introducing mode, and the inside and outside two-layer air flow is made by a well-known automatic control technique.

The casing 4 includes an upstream partition 9a and a downstream partition 9b in a vertical intermediate portion of the interior of the casing 4. The upstream partition 9a is disposed upstream of the cooling heat exchanger 2 in the cold air passage R1 to vertically divide the cold air passage R1 into two parts. The downstream end of the upstream partition 9a is close to an air inlet surface of the cooling heat exchanger 2. During the inside and outside two-layer air flow mode, inside air is introduced into a portion below the upstream partition 9a, whereas outside air is introduced into a portion above the upstream partition 9a. During the inside-air circulating mode, inside air is introduced into both the portion above the upstream partition 9a and the portion below the upstream partition 9a. During the outside-air introducing mode, outside air is introduced into both the portion above the upstream partition 9a and the portion below the upstream partition 9a.

The downstream partition 9b is disposed downstream of the cooling heat exchanger 2 in the cold air passage R1 to vertically divide the cold air passage R1 into two parts. The upstream end of the downstream partition 9b is close to an air outlet surface of the cooling heat exchanger 2. The downstream end of the downstream partition 9b extends to be close to an air inlet surface of the heating heat exchanger 3, dividing the warm air passage into a lower warm air passage R2A and an upper warm air passage R2B.

The heating heat exchanger 3 is disposed in the vertical intermediate portion of the casing 4 so as to be formed over the lower warm air passage R2A and the upper warm air passage R2B. A lower bypass passage R3A is formed below the heating heat exchanger 3. The lower bypass passage R3A extends rearward, and then, is bent and extends upward. An upper bypass passage R3B is formed above the heating heat exchanger 3. The upper bypass passage R3B extends rearward.

The heat damper 8 is disposed as shown in FIG. 10 in an open state, and serves as defining the lower warm air passage R2A and the upper warm air passage R2B. This allows the warm air which has flowed through the lower warm air passage R2A and the cold air which has flowed through the lower bypass passage R3A to be supplied to the heat outlet 4d. When the heat damper 8 is closed, the closing plate portion 8b extends vertically, the warm air which has flowed through the lower warm air passage R2A and the cold air which has flowed through the lower bypass passage R3A flows upward.

The air mix damper 5 includes a plurality of first louvers 5d opening/closing the upper bypass passage R3B, a plurality of second 5e opening/closing the lower bypass passage R3A, a plurality of third louvers 5f opening/closing the upper warm air passage R2B, and a plurality of fourth lower louvers 5g opening/closing the lower warm air passage R2A. The first to fourth louvers 5d to 5g are rotatably supported by the frame member 5a. The first to fourth louvers 5d to 5g are configured to link together.

The first louvers 5d are inclined so as to be positioned downward toward the downstream portion of the air flow when the upstream end of the upper bypass passage R3B is opened. The second louvers 5e are inclined so as to be positioned downward toward the downstream portion of the air flow when the upstream end of the lower bypass passage R3A is opened. The third louvers 5f are inclined so as to be positioned upward toward the downstream portion of the air flow when the upstream end of the upper warm air passage R2B is opened. The fourth louvers 5g are inclined so as to be positioned upward toward the downstream portion of the air flow when the upstream end of the lower warm air passage R2A is opened.

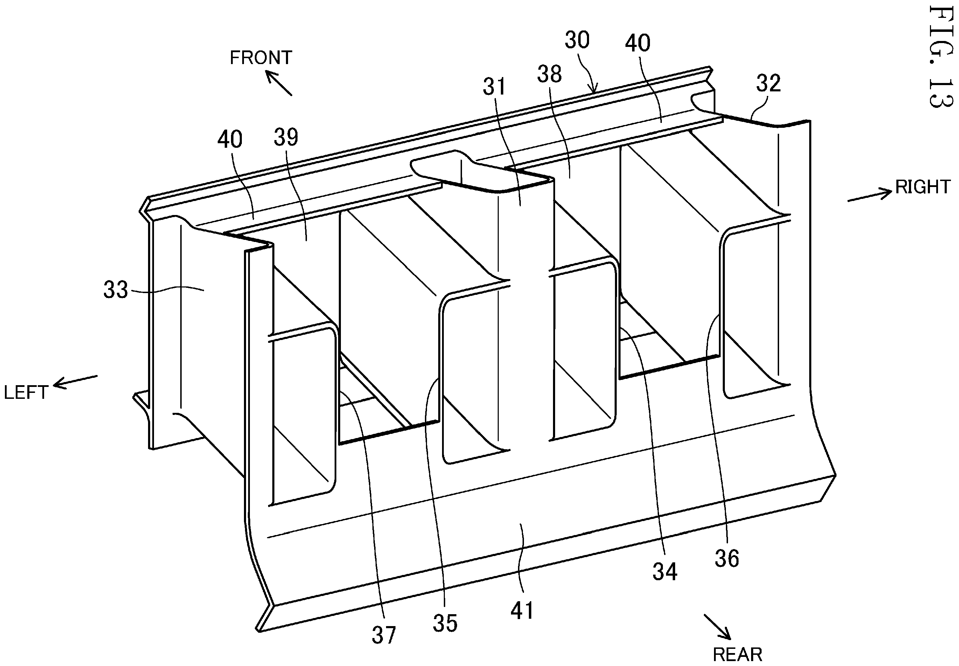

The baffle 30 of the second embodiment is disposed inside a casing 4 at the position where the flow of the cold air which has flowed through the upper bypass passage R3B and the flow of the warm air which has flowed from below join together. The basic configuration of baffle 30 of this embodiment is the same as that of the first embodiment, and the shape thereof is changed to be the inside and outside two-layer air flow type. That is to say, as shown in FIG. 13, the baffle 30 of the second embodiment is provided with a central warm air guide tube 31, a right warm air guide recess 32, a left warm air guide recess 33, a middle right cold air guide tube 34, a middle left cold air guide tube 35, a right cold air guide tube 36, and a left cold air guide tube 37. A right warm and clod air mixing passage 38 is provided between the middle right cold air guide tube 34 and the right cold air guide tube 36 of the baffle 30 to mix warm air and cold air together. A left warm and clod air mixing passage 39 is provided between the middle left cold air guide tube 35 and the left cold air guide tube 37 of the baffle 30 to mix warm air and cold air together.

An upper portion of the baffle 30 is provided with a cold-air-side plate portion 40 not allowing the cold air which has flowed through the upper bypass passage R3B to flow directly toward the defrost outlet 4b. A lower portion of the baffle 30 is provided with an extension plate 41 extending rearward. The extension plate 41 is curved downward toward the rear. The rear end of the extension plate 41 abuts on the interior surface of the casing 4.

According to the vehicle air conditioner 1 of the second embodiment, in the same or similar manner as or to the first embodiment, the baffle 30 can guide the warm air which has flowed through the warm air passages R2A and R2B toward the defrost outlet 4b, and the cold air which has flowed through the upper bypass passage R3B toward the vent outlet 4c. This makes it possible to appropriately adjust the temperature of the air-conditioned wind blown out of the defrost outlet 4b and the temperature of the air-conditioned wind blown out of the vent outlet 4c. This can accurately control the temperature to improve comfort.

Switching to the inside and outside two-layer air flow mode can supply outside air, which is relatively dry in winter, to the defrost outlet 4b to defog a front window glass in an excellent manner, and in addition, relatively warm inside air is supplied to the heat outlet 4d to improve heating efficiency.

### (Third Embodiment)

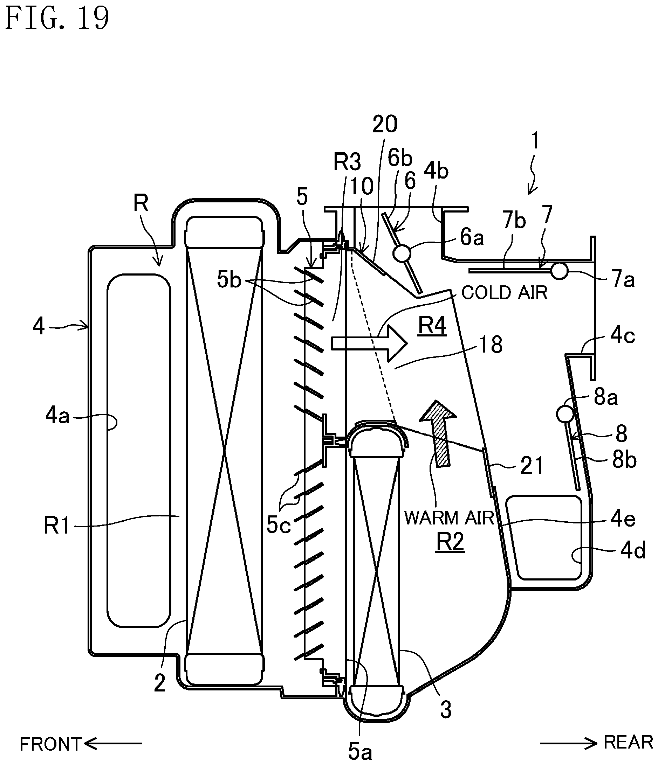

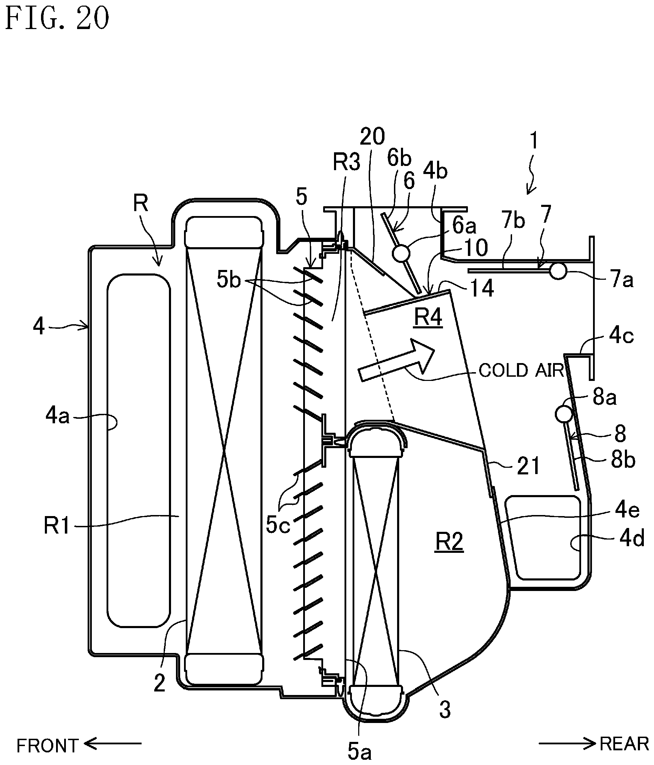

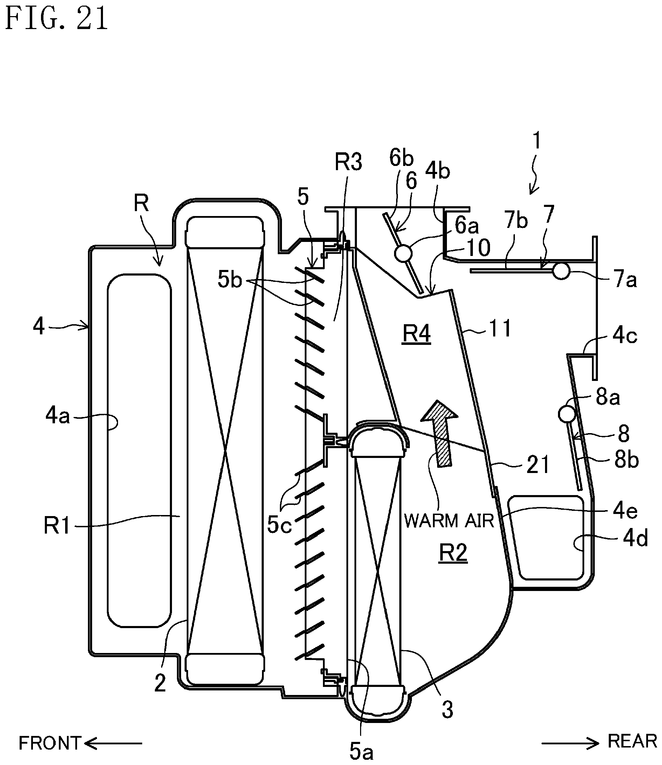

FIGS. 19 to 21 illustrate a vehicle air conditioner 1 according to a third embodiment of the present disclosure. The vehicle air conditioner 1 of the third embodiment is the same as that in the first embodiment, i.e., a single-layer flow type, except that, in the vehicle air conditioner 1 of the third embodiment, the cold air which has flowed through the bypass passage R3 is guided toward the vent outlet 4c (the direction of the vent outlet 4c) and is also guided toward the heat outlet 4d (the direction of the heat outlet 4d). In the following description, the components that have been described in the first embodiment are designated by the same reference characters, and are not described in detail. The following description will focus on only differences from the first embodiment.

In the third embodiment, as shown in FIG. 19, the bottom wall of the right warm and clod air mixing passage 18 of the baffle 10 is inclined downward toward the rear. The bottom wall of the left warm and clod air mixing passage 19 is configured in the same or similar manner. This can guide the cold air which has flowed through the bypass passage R3 toward the heat outlet 4d, and thus, this makes it possible to appropriately adjust the temperature of the air-conditioned wind blown out of the defrost outlet 4b and the temperature of the air-conditioned wind blown out of the vent outlet 4c. This can accurately control the temperature to improve comfort.

The flow direction of the cold air which has flowed through the bypass passage R3 can be set according to the shapes of the wall of the right warm and clod air mixing passage 18 and of the wall of the left warm and clod air mixing passage 19, and the cold air which has flowed through the bypass passage R3 may be guided toward only the heat outlet 4d.

In the above first to third embodiments, the air mix damper 5 is a louver damper. However, this is only an exemplary embodiment of the present disclosure. For example, various dampers such as a film damper and a rotary damper can be utilized. Various dampers such as a rotary damper can be utilized for the dampers 6 to 8 for switching the blowout mode.

In the above first to third embodiments, the present disclosure is applied to the semi-center unit in which the blower unit is disposed in front of a passenger sheet. However, this is only an exemplary embodiment of the present disclosure. For example, the present disclosure is applicable to a full-center unit in which a blower unit disposed in the central portion of a vehicle in the widthwise direction.

The embodiments described above are mere examples in every respect, and shall not be interpreted in a limited manner.

### INDUSTRIAL APPLICABILITY

As can be seen from the foregoing description, a vehicle air conditioner according to the present disclosure can be mounted on, e.g., automobiles.

### DESCRIPTION OF REFERENCE CHARACTERS

- 1: Vehicle Air Conditioner
- 2: Cooling Heat Exchanger
- 3: Heating Heat Exchanger
- 4: Casing
- 4b: Defrost Outlet
- 4c: Vent Outlet
- 4d: Heat Outlet
- 10: Baffle
- 11: Central Warm Air Guide Tube (Warm Air Guide)
- 12: Right Warm Air Guide Recess (Warm Air Guide)
- 13: Left Warm Air Guide Recess (Warm Air Guide)
- 14: Middle Right Cold Air Guide Tube (Cold Air Guide)
- 15: Middle Left Cold Air Guide Tube (Cold Air Guide)
- 16: Right Cold Air Guide Tube (Cold Air Guide)
- 17: Left Cold Air Guide Tube (Cold Air Guide)
- 18: Right Warm And Cold Air Mixing Passage
- 19: Left Warm And Cold Air Mixing Passage
- 20: Cold-air-side Plate portion
- 21: Warm-air-side Plate Portion
- R1: Cold Air Passage
- R2: Warm Air Passage
- R3: Bypass Passage
- R4: Air Mixing Space

## Claims

1. A vehicle air conditioner (1) comprising:
a cooling heat exchanger (2) cooling air-conditioning air;
a heating heat exchanger (3) heating air-conditioning air;
a casing (4) including:
a cold air passage (R1) provided with the cooling heat exchanger (2);
a warm air passage (R2) communicating with a downstream portion of the cold air passage (R1), and provided with the heating heat exchanger (3);
a bypass passage (R3) branched from the downstream portion of the cold air passage (R1) and bypassing the warm air passage (R2);
an air mixing space (R4) allowing a downstream portion of the warm air passage to communicate with a downstream portion of the bypass passage (R3); and
a defrost outlet (4b), a vent outlet (4c), and a heat outlet (4d) each communicating with the air mixing space (R4); and
an air mix damper (5) disposed inside the casing (4) and adjusting an amount of warm air flowing into the air mixing space (R4) from the downstream portion of the warm air passage (R2) and an amount of cold air flowing into the air mixing space (R4) from the downstream portion of the bypass passage (R3), wherein
a baffle (10) is disposed inside the casing (4) at a position where the warm air and the cool air join together, and
a central portion of the baffle (10) in a vehicle widthwise direction is provided with a warm air guide tube (11) guiding the warm air which has flowed through the warm air passage (R2) toward the defrost outlet (4b),
the baffle (10) includes a left cold air guide tube (17) on a left side of the warm air guide tube (11) guiding the cold air which has flowed through the bypass passage (R3) toward at least one of the vent outlet (4c) or the heat outlet (4d), **characterized in that**:
the baffle (10) includes a right cold air guide tube (16) on a right side of warm air guide tube (11) guiding the cold air which has flowed through the bypass passage (R3) toward at least one of the vent outlet (4c) or the heat outlet (4d),
the baffle (10) is provided with a warm and cold air mixing passage (18, 19) mixing the warm air which has flowed through the warm air passage (R2) and the cold air which has flowed through the bypass passage (R3) together,
the vent outlet (4c) is disposed below the defrost outlet (4b), and
the left cold air guide tube (17) and the right cold air guide tube (16) are disposed in a lower portion of the baffle (10).

2. The vehicle air conditioner (1) of claim 1, wherein
the left cold air guide tube (17) and the right cold air guide tube (16) are positioned adjacent to an upstream portion of the warm and clod air mixing passage (18, 19) in a flow direction in the baffle (10).

3. The vehicle air conditioner (1) of claim 1, wherein
the defrost outlet (4b) is provided to a top wall of the casing (4), and
the baffle (10) is provided with a cold-air-side plate portion (21) extending downward and guiding the cold air, which has flowed through the bypass passage (R3), downward.

4. The vehicle air conditioner (1) of claim 1, wherein
the heat outlet (4d) is disposed below the defrost outlet (4b) and the vent outlet (4c), and
a lower portion of the baffle (10) is provided with a warm-air-side plate portion (21) extending downward and substantially preventing the warm air, which has flown through the warm air passage (R2), from flowing toward the heat outlet (4d).

5. The vehicle air conditioner (1) of claim 1, wherein
the vent outlet (4c) is disposed at both sides of the casing (4) in a vehicle width direction, and
the left cold air guide tube (17) and the right cold air guide tube (16) are disposed at both sides of the baffle (10) in the vehicle width direction, and guides the cold air toward the vent outlet (4b) at the both sides in the vehicle width direction.

6. The vehicle air conditioner (1) of claim 1, wherein
the warm air guide tube (11) and the left cold air guide tube (17) and the right cold air guide tube (16) extend in different directions from each other.

## Patentansprüche

1. Fahrzeugklimaanlage (1) aufweisend:
einen Kühlwärmetauscher (2), der klimatisierte Luft kühlt;
einen Heizwärmetauscher (3), der klimatisierte Luft heizt;
ein Gehäuse (4), welches aufweist:
einen Kaltluftkanal (R1), der mit dem Kühlwärmetauscher (2) vorgesehen ist;
einen Warmluftkanal (R2), der mit einem stromabwärtigen Abschnitt des Kaltluftkanals (R1) in Verbindung steht, und mit dem Heizwärmetauscher (3) vorgesehen ist;
einen Umgehungskanal (R3), der von dem stromabwärtigen Abschnitt des Kaltluftkanals (R1) abzweigt und den Warmluftkanal (R2) umgeht;
einen Luftmischraum (R4), der es einem stromabwärtigen Abschnitt des Warmluftkanals ermöglicht, mit einem stromabwärtigen Abschnitt des Umgehungskanals (R3) in Verbindung zu stehen ; und
einen Entfrosterauslass (4b), einen Entlüftungsauslass (4c), und einen Wärmeauslass (4d), die jeweils mit dem Luftmischraum (R4) in Verbindung stehen; und
einen Luftmischungsdämpfer (5), der innerhalb des Gehäuses (4) angeordnet ist und der eine von dem stromabwärtigen Abschnitt des Warmluftkanals (R2) in den Luftmischraum (R4) einströmende Warmluftmenge und eine von dem stromabwärtigen Abschnitt des Umgehungskanals (R3) in den Luftmischraum (R4) einströmende Kaltluftmenge einstellt, wobei
eine Ablenkplatte (10) innerhalb des Gehäuses (4) an einer Position angeordnet ist, an der sich die warme Luft und die kalte Luft vereinen, und
ein Mittelteil der Ablenkplatte (10) in einer Fahrzeugbreitenrichtung mit einem Warmluftführungsrohr (11) versehen ist, das die warme Luft führt, die durch den Warmluftkanal (R2) in Richtung des Entfrosterauslasses (4b) geströmt ist,
die Ablenkplatte (10) ein linkes Kaltluftführungsrohr (17) an einer linken Seite des Warmluftführungsrohrs (11) aufweist, das die kalte Luft führt, die durch den Umgehungskanal (R3) in Richtung des Entlüftungsauslasses (4c) und/oder des Wärmeauslasses (4d) geströmt ist, **dadurch gekennzeichnet, dass**:
die Ablenkplatte (10) ein rechtes Kaltluftführungsrohr (16) an einer rechten Seite des Warmluftführungsrohrs (11) aufweist, das die kalte Luft führt, die durch den Umgehungskanal (R3) in Richtung des Entlüftungsauslasses (4c) und/oder des Wärmeauslasses (4d) geströmt ist,
die Ablenkplatte (10) mit einem Warm- und Kaltluftmischkanal (18, 19) versehen ist, der die warme Luft, die durch den Warmluftkanal (R2) geströmt ist, und die kalte Luft, die durch den Umgehungskanal (R3) geströmt ist, miteinander mischt,
der Entlüftungsauslass (4c) unterhalb des Entfrosterauslasses (4b) angeordnet ist, und
das linke Kaltluftführungsrohr (17) und das rechte Kaltluftführungsrohr (16) in einem unteren Teil der Ablenkplatte (10) angeordnet sind.

2. Fahrzeugklimaanlage (1) nach Anspruch 1, wobei
das linke Kaltluftführungsrohr (17) und das rechte Kaltluftführungsrohr (16) benachbart zu einem stromaufwärtigen Abschnitt des Warm- und Kaltluftmischkanals (18, 19) in einer Strömungsrichtung in der Ablenkplatte (10) positioniert sind.

3. Fahrzeugklimaanlage (1) nach Anspruch 1, wobei
der Entfrosterauslass (4b) an einer oberen Wand des Gehäuses (4) vorgesehen ist, und
die Ablenkplatte (10) mit einem kaltluftseitigen Plattenteil (21) vorgesehen ist, der sich nach unten erstreckt und die kalte Luft, die durch den Umgehungskanal (R3) geströmt ist, nach unten führt.

4. Fahrzeugklimaanlage (1) nach Anspruch 1, wobei
der Wärmeauslass (4d) unterhalb des Entfrosterauslasses (4b) und des Entlüftungsauslasses (4c) angeordnet ist, und
ein unterer Teil der Ablenkplatte (10) mit einem warmluftseitigen Plattenteil (21) vorgesehen ist, der sich nach unten erstreckt und im Wesentlichen verhindert, dass die warme Luft, die durch den Warmluftkanal (R2) geströmt ist, zu dem Wärmeauslass (4d) strömt.

5. Fahrzeugklimaanlage (1) nach Anspruch 1, wobei
der Entlüftungsauslass (4c) an beiden Seiten des Gehäuses (4) in einer Fahrzeugbreitenrichtung angeordnet ist, und
das linke Kaltluftführungsrohr (17) und das rechte Kaltluftführungsrohr (16) an beiden Seiten der Ablenkplatte (10) in der Fahrzeugbreitenrichtung angeordnet sind, und die kalte Luft in Richtung des Entlüftungsauslasses (4b) an beiden Seiten in der Fahrzeugbreitenrichtung führt.

6. Fahrzeugklimaanlage (1) nach Anspruch 1, wobei
das Warmluftführungsrohr (11) und das linke Kaltluftführungsrohr (17) und das rechte Kaltluftführungsrohr (16) sich in unterschiedlichen Richtungen voneinander erstrecken.

## Revendications

1. Climatiseur de véhicule (1), comprenant :
un échangeur de chaleur de refroidissement (2) refroidissant un air de climatisation ;
un échangeur de chaleur de chauffage (3) chauffant un air de climatisation ;
un corps (4) incluant :
un passage pour air froid (R1) doté de l'échangeur de chaleur de refroidissement (2) ;
un passage pour air chaud (R2) communiquant avec une portion aval du passage pour air froid (R1), et doté de l'échangeur de chaleur de chauffage (3) ;
un passage de contournement (R3) bifurquant à partir de la portion aval du passage pour air froid (R1) et contournant le passage pour air chaud (R2) ;
un espace de mélange d'air (R4) permettant à une portion aval du passage pour air chaud de communiquer avec une portion aval du passage de contournement (R3), et
une sortie de dégivrage (4b), une sortie d'aération (4c), et une sortie de chaleur (4d), chacune communiquant avec l'espace de mélange d'air, (R4), et
un clapet de mélange à air (5) disposé dans le corps (4) et réglant une quantité d'air chaud s'écoulant vers l'espace de mélange d'air (R4) à partir de la portion aval du passage pour air chaud (R2) et une quantité d'air froid s'écoulant vers l'espace de mélange d'air (R4) à partir de la portion aval du passage de contournement (R3), dans lequel
une chicane (10) est disposée dans le corps (4) en une position où l'air chaud et l'air frais se rejoignent, et
une portion centrale de la chicane (10) dans une direction de largeur de véhicule est dotée d'un tube de guidage pour air chaud (11) guidant l'air chaud, lequel s'est écoulé à travers le passage pour air chaud (R2) vers la sortie de dégivrage (4b) ;
la chicane (10) inclut un tube de guidage pour air chaud gauche (17) sur un côté gauche du tube de guidage pour air chaud (11) guidant l'air froid qui s'est écoulé à travers le passage de contournement (R3) vers au moins une sortie parmi la sortie d'aération (4c) ou la sortie de chaleur (4d), **caractérisé en ce que** :
la chicane (10) inclut un tube de guidage pour air froid droit (16) sur un côté droit du tube de guidage pour air chaud (11) guidant l'air froid qui s'est écoulé à travers le passage de contournement (R3) vers au moins une sortie parmi la sortie d'aération (4c) ou la sortie de chaleur (4d) ;
la chicane (10) est dotée d'un passage de mélange pour air chaud et air froid (18, 19) mélangeant ensemble l'air chaud qui s'est écoulé à travers le passage pour air chaud (R2) et l'air froid qui s'est écoulé à travers le passage de contournement (R3) ;
la sortie d'aération (4c) est disposée au-dessous de la sortie de dégivrage (4b), et
le tube de guidage pour air froid gauche (17) et le tube de guidage pour air froid droit (16) sont disposés dans une portion inférieure de la chicane (10).

2. Climatiseur de véhicule (1) selon la revendication 1, dans lequel
le tube de guidage pour air froid gauche (17) et le tube de guidage pour air froid droit (16) sont positionnés de manière adjacente à une portion amont des passages de mélange d'air chaud et froid (18, 19) dans une direction d'écoulement dans la chicane (10).

3. Climatiseur de véhicule (1) selon la revendication 1, dans lequel
la sortie de dégivrage (4b) est dotée d'une paroi supérieure du corps (4), et
la chicane (10) est dotée d'une portion formant plaque côté air froid (21) s'étendant vers le bas et guidant l'air froid, lequel s'est écoulé à travers le passage de contournement (R3), vers le bas.

4. Climatiseur de véhicule (1) selon la revendication 1, dans lequel
la sortie de chaleur (4d) est disposée au-dessous de la sortie de dégivrage (4b) et de la sortie d'aération (4c), et
une portion inférieure de la chicane (10) est dotée d'une portion formant plaque côté air chaud (21) s'étendant vers le bas et empêchant en grande partie l'écoulement vers la sortie de chaleur (4d) de l'air chaud, lequel s'est écoulé à travers le passage pour air chaud (R2).

5. Climatiseur de véhicule (1) selon la revendication 1, dans lequel
la sortie d'aération (4c) est disposée des deux côtés du corps (4) dans une direction de largeur de véhicule, et
le tube de guidage pour air froid gauche (17) et le tube de guidage pour air froid droit (16) sont disposés des deux côtés de la chicane (10) dans la direction de largeur de véhicule, et guident l'air froid vers la sortie d'aération (4b) des deux côtés dans la direction de largeur de véhicule.

6. Climatiseur de véhicule (1) selon la revendication 1, dans lequel
le tube de guidage pour air chaud (11), le tube de guidage pour air froid gauche (17), et le tube de guidage pour air froid droit (16) s'étendent dans des directions différentes les unes des autres.
